(19) Europäisches Patentamt / European Patent Office / Office européen des brevets

(11) **EP 4 018 706 B1**

(12) **EUROPEAN PATENT SPECIFICATION**

(45) Date of publication and mention
of the grant of the patent:
**24.01.2024 Bulletin 2024/04**

(21) Application number: **19783110.0**

(22) Date of filing: **23.08.2019**

(51) International Patent Classification (IPC):
*H04W 16/10* (2009.01)   *H04W 24/02* (2009.01)
*H04W 74/08* (2009.01)   *H04W 74/00* (2009.01)
*H04W 88/18* (2009.01)

(52) Cooperative Patent Classification (CPC):
**H04W 16/10; H04W 24/02;** H04W 74/002;
H04W 88/18

(86) International application number:
**PCT/IB2019/057113**

(87) International publication number:
**WO 2021/038270 (04.03.2021 Gazette 2021/09)**

(54) **METHOD FOR COGNITIVE PHYSICAL RANDOM ACCESS CHANNEL PLANNING AND RELATED APPARATUS**

VERFAHREN ZUR KOGNITIVEN PHYSIKALISCHEN DIREKTZUGRIFFSKANALPLANUNG UND ZUGEHÖRIGE VORRICHTUNG

PROCÉDÉ DE PLANIFICATION DE CANAL D'ACCÈS ALÉATOIRE PHYSIQUE COGNITIF ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.06.2022 Bulletin 2022/26**

(73) Proprietor: **Telefonaktiebolaget LM Ericsson (publ)**
**164 83 Stockholm (SE)**

(72) Inventors:
• **SARKAR, Debasish**
**Irvine, California 92620 (US)**
• **MONDAL, Surajit**
**Bangalore 560087 (IN)**
• **SEN, Ayan**
**Bangalore 560066 (IN)**

(74) Representative: **Ericsson**
**Patent Development**
**Torshamnsgatan 21-23**
**164 80 Stockholm (SE)**

(56) References cited:
**WO-A1-2018/155885    CN-A- 104 125 574**

**Description**

TECHNICAL FIELD

The present disclosure relates generally to physical random access channel planning using a random access channel planning node in a communication network.

BACKGROUND

Random access (RA) is a key initial procedure for multiple communication network events as described in 3GPP TS 38.300 R15. These network events may include:

- Initial access from Radio Resource Connection Idle (RRC_IDLE);
- RRC Connection Re-establishment procedure;
- Handover;
- Downlink (DL) or Uplink (UL) data arrival during RRC_CONNECTED when UL synchronization status is "non-synchronized";
- The transition from RRC_INACTIVE;
- To establish time alignment at secondary cell (SCell) addition;
- Request for other system information (SI); and
- Beam failure recovery

End-user experience and various network performance indicators (such as accessibility, drop rate, latency or delay in access procedure, user bitrate, etc.) may be highly dependent on the performance of the above network events, which may be highly influenced by the success rate or delay associated with a RA procedure.

The importance of performance of the above network events and, thus, of a RA procedure further increases with the required network densification for 5G deployment with high-band frequency.

Both WO 2018/155885 A1 and CN 104125574 A disclose methods for determining a root sequence index for avoiding collisions in random access.

SUMMARY

According to a first aspect, the present invention provides a method as defined by independent claim 1.

According to a second aspect of the present invention, a random access channel planning node as defined by independent claim 9 is provided.

BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:

Figure 1 illustrates cyclic shifts, $C_v$, for an unrestricted set of root sequences;
Figure 2 illustrates $N_{cs}$ values for an unrestricted set of root sequences;
Figure 3 is a flowchart illustrating operations of inner method A that may be performed by a random access channel planning node in accordance with some embodiments of the present disclosure;
Figure 4 is a block diagram of operational modules and related circuits of a random access channel planning node in accordance with some embodiments of the present disclosure;
Figure 5 is a logical diagram illustrating coverage overlaps between a candidate cell and neighboring cells;
Figure 6 illustrates operations that may be performed by random access channel planning node 400 for RSI planning for a green-field network in accordance with some embodiments of the present disclosure;
Figure 7 illustrates operations that may be performed by random access channel planning node 400 for coverage overlap detection based on predicted coverage polygon(s) in accordance with some embodiments of the present disclosure;
Figure 8 illustrates an exemplary coverage overlap detection based on predicted coverage polygons from performing the operations of Figure 7 in accordance with some embodiments of the present disclosure;
Figure 9 is an exemplary RRC Reconfiguration message containing the information element rach-ConfigCommon setup;

Figure 10 is a table showing exemplary sets of RSI groups created from 139 RSIs for $R_{RSI}$ = 8;

Figure 11 is a logical diagram illustrating coverage overlap between a candidate cell and a neighboring cell based on geo-located measurement events from the candidate and neighbor cell;

Figure 12 illustrates operations that may be performed by a random access channel planning node for coverage overlap detection based on geo-located measurement events from a candidate cell and neighbor cell in accordance with some embodiments of the present disclosure;

Figure 13 illustrates cloud integration of random access planning node for a NR access communication network in accordance with some embodiments of the present disclosure;

Figure 14 illustrates operations that may be performed by a random access channel planning node for cloud implementation; and

Figures 15-16 are flowcharts illustrating operations that may be performed by a random access channel planning node in accordance with some embodiments of the present disclosure.

DETAILED DESCRIPTION

Various embodiments will be described more fully hereinafter with reference to the accompanying drawings. Other embodiments may take many different forms and should not be construed as limited to the embodiments set forth herein; rather, these embodiments are provided by way of example to convey the scope of the subject matter to those skilled in the art. Like numbers refer to like elements throughout the detailed description.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

One approach to try to ensure effective performance of the RA procedure is appropriate planning or allocation of Random Access Channel (RACH) Root Sequence Index (RSI) to minimize or reduce the probability of RSI collision.

One RACH root sequence can generate several preambles by cyclic shift. One or more root sequences may be needed to generate all required preambles in a cell. The number of RACH root sequences required to generate the desired number of RACH preambles depends on the applied cyclic shift. According to 3GPP TS 38.211 R15, there are 64 preambles defined in each time-frequency Physical Random Access Channel (PRACH) occasion, enumerated in increasing order of first increasing cyclic shift $C_v$ of a logical root sequence, and then in increasing order of the logical root sequence index, starting with the index obtained from the higher-layer parameter prach-RootSequenceIndex. Additional preamble sequences, in case 64 preambles cannot be generated from a single root Zadoff-Chu sequence, are obtained from the root sequences with the consecutive logical indexes until all the 64 sequences are found. The logical root sequence order is cyclic; the logical index 0 is consecutive to 837 when $L_{RA}$ = 839 and is consecutive to 137 when $L_{RA}$ = 139.. The long sequence is used for subcarrier spacings 1.25 and 5 kHz and is used only for frequencies below 6 GHz. The short sequence is used for subcarrier spacings 15, 30, 60 and 120 kHz. 30 kHz is used for mid-band and 120 kHz is used for high-band. 3GPP TS 38.211 R15 indicates the possibility of 139 RACH Root Sequences for New Radio (NR) deployment with high-band. The cyclic shift $C_v$ has been defined in the below equation for an unrestricted set of root sequences.

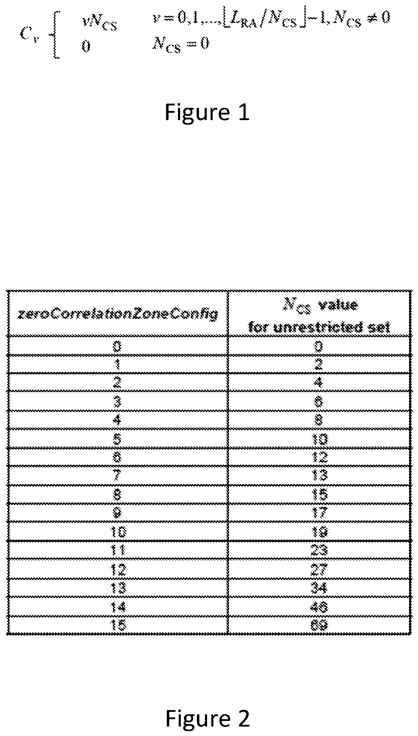

Cyclic shift $C_v$ has been defined in the equation shown in Figure 1 for an unrestricted set of root sequences. In the equation of Figure 1, $N_{cs}$ is the minimum length of the cyclic shift duration and $L_{RA}$ = 139. The possible values of $N_{CS}$ for the unrestricted set have been defined in the table shown in Figure 2.

In LTE, there are a total of 839 RSIs. To reduce RSI conflicts, one approach for RSI allocation process or planning keeps the separation of a number of RACH root sequences required to generate the required number of preambles sufficient for desired cell range. Due to the relatively higher inter-site distance with lower frequency range (<6 GHz) and a higher number of available RSIs, this approach may minimize RACH collision and achieve acceptable RA performance.

3GPP TS 38.211 R15 indicates the possibility of 139 RACH Root Sequences for high-band. So, for NR deployment with a high-band total number of RSI is 139 and the inter-site distance is much lesser (e.g. 150 - 200 meters) compared to the same with frequency range <6Ghz. Due to very closely placed sites, the probability of coverage overlap with neighboring cells is much higher. The degree of the problem also increases due to the multipath components of high-band signals.

Some approaches for RSI allocation and planning method may not be not sufficient to address this issue and a more intelligent method may be needed for SI allocation capable of achieving minimum possible RACH collision with a limited number of possible RACH root sequences.

Certain aspects of the present disclosure and their embodiments may provide solutions to these and/or other challenges. Various embodiments may provide apparatus and methods for (a) resolving RACH collision problems in an operational network, and (b) RSI planning in a green-field network, through the derivation of a collision factor metric (also referred to as a root sequence index collision factor or RSI collision factor). A collision factor metric may be calculated based on coverage overlap detection techniques applicable for both green-field RSI planning and an operational NR access network deployed with high-band. In some embodiments, through cloud implementation, RACH performance issues may be resolved automatically and autonomously without human intervention.

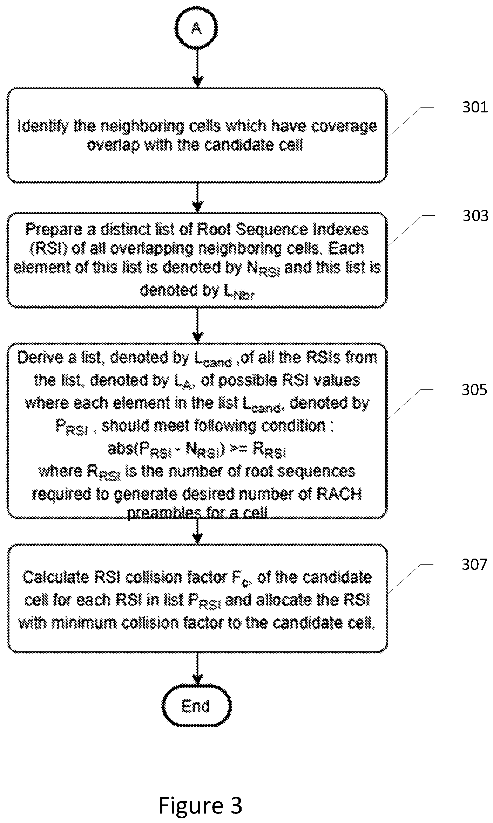

Various embodiments may provide a method for coverage overlap detection and RSI allocation (also referred to as inner method A) as illustrated in Figure 3. Inner method A of Figure 3 may be repeated for each candidate cell for which new RSI needs to be planned or RACH performance issue needs to be fixed. Inner method A may be adapted, as described in more detail below, for different environments including (a) green-field RSI planning, and (b) resolving RACH performance issues in an operational network.

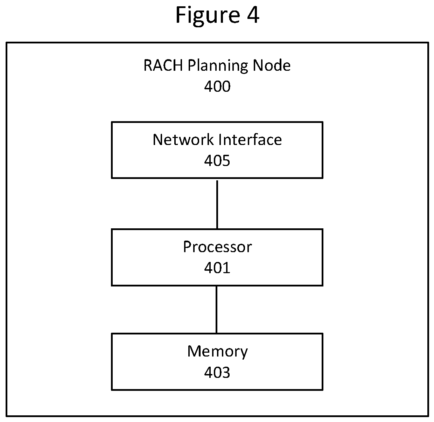

Figure 4 is a block diagram illustrating elements of a random access channel planning node 400 (also referred to as RACH planning node 400) that is configured according to various embodiments. Random access channel planning node 400 may be located in a communication network either directly or indirectly via cloud integration. As shown, the random access channel planning node 400 includes at least one processor circuit 401 (also referred to as a processor), at least one memory circuit 403 (also referred to as memory), and a network interface 405 (e.g., a wired control interface and/or wireless control interface) configured to communicate with the communication network, e.g. with a node in a 5G communication network. Random access channel planning node 400 may be configured as a node in a radio access or wireless network, and may contain a RF front end with one or more power amplifiers that transmit and receive through antennas of an antenna array. The at least one memory 403 stores computer readable program code that when executed by the at least one processor 401 causes the processor 401 to perform operations according to embodiments disclosed herein.

Referring to Figure 3, random access channel planning node 400 performs operations according to inner method A. Random access channel planning node identifies 301 neighboring cells which have coverage overlap with a candidate cell. Random access channel planning node 400 prepares 303 a distinct list of root sequences indexes (RSI) of all overlapping neighboring cells. The distinct list may be referred to as a first list. Each element of the first list may be denoted by $N_{RSI}$ and the first list may be denoted by $L_{Nbr}$.

Still referring to Figure 3, random access channel planning node 400 may derive 305 a second list, denoted by $L_{cand}$, of all the RSIs from the first list, denoted by $L_A$, of possible RSI values where each element in the second list $L_{cand}$, denoted by $P_{RSI}$, should meet the following condition: $abs(P_{RSI} - N_{RSI}) \geq R_{RSI}$, where $R_{RSI}$ is the number of root sequences required to generate a desired number of RACH preambles for a cell.

Still referring to Figure 3, random access channel planning node 400 calculates 307 a RSI collision factor, $F_c$, of the candidate cell for each $P_{RSI}$ in the second list and allocates the RSI with a minimum RSI collision factor to the candidate cell.

Certain embodiments may provide one or more of the following technical advantages. A potential advantage of various embodiments may include lowering RACH collision probability, thus, improving RA procedure and subsequent event performance. A further potential advantage may be an effective user experience with decreased impact from the RA procedure. Some embodiments may provide for physical random access channel planning independent of the network product vendor. Some embodiments may further provide for an automated and autonomous method integrated with the network over the cloud without human effort to resolve RACH performance issues.

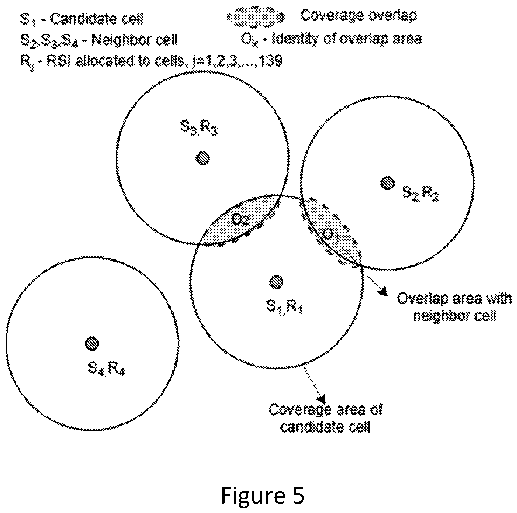

In various embodiments, inner method A of Figure 3 may be illustrated with reference to Figure 5. Figure 5 shows a logical diagram illustrating coverage overlaps $O_1$ and $O_2$ between a candidate cell and neighboring cells $S_2$ and $S_3$, respectively. Figure 5 illustrates an exemplary deployment of NR nodes having part of a cluster, $S_i$, where n=1,2,3, 4...., $N_s$ ($N_s$ = count of cells in the network), and $S_i$ denotes the cells or sectors. A candidate cell refers to the cell or sector for which RSI need to be planned. $R_j$ denotes the allocated RSI from available 139 RSIs.

Still referring to Figure 5, $S_1$ is a candidate cell for which RSI needs to be planned. That is, $R_1$ needs to be identified so that $S_1$ does not have an RSI collision with neighboring cells $S_2$ and $S_3$. As shown in Figure 5, candidate cell $S_1$ has a coverage overlap with neighbor cell $S_2$ and $S_3$; and neighbor cell $S_4$ does not have a coverage overlap with cell $S_1$.

Still referring to Figure 5, a minimum RSI collision factor of a cell is derived for each candidate cell during the allocation process.

The RSI collision factor, $F_c$, of a cell may be defined as follows:

$$FC \equiv \frac{\sum_{n=1}^{x} \textit{Area of coverage overlap with Neighbor cell with } abs(P_{RSI} - N_n) < R_{RSI}}{\textit{Total coverage area of candidate cell}}$$

Where:

P$_{RSI}$ is the RSI of the candidate cell;
N$_n$ is the RSI of the neighbor cell having coverage overlap with the candidate cell; and
R$_{RSI}$ is the number of root sequence required to generate the desired number of preambles for the candidate cell.

Still referring to Figure 5, while allocating RSI for a candidate a cell, F$_c$ is derived for each possible RSI and the RSI with minimum F$_c$ is allocated to the candidate cell S$_1$.

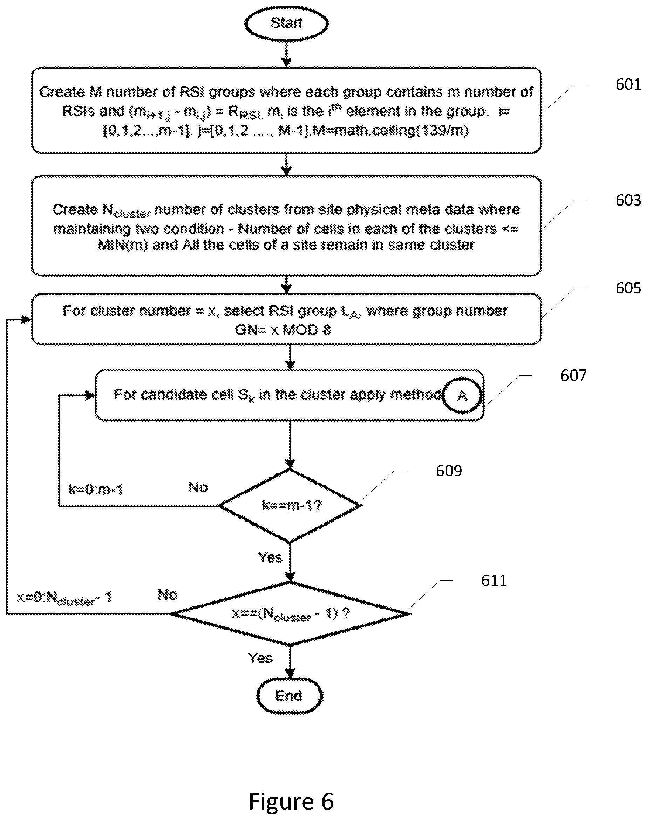

Greenfield RSI planning will now be described. Figure 6 illustrates operations that may be performed by random access channel planning node 400 for RSI planning for a green-field network. Inner method A described with reference to Figure 3 may be used for a green-field network with adaptions to fit available inputs for coverage overlap detection and reduce probability of RSI collision through usage of all 139 available RSI in a continuous manner.

Referring to Figure 6, random access channel planning node 400 may create 601M number of RSI groups where each group contains m number of RSIs and $(m_{i+1,j} - m_{i,j}) = R_{RSI}$; where $m_i$ is the i$^{th}$ element in the group, I + [0, 1, 2..., m-1], j = [0, 1, 2..., M-1], and M = match.ceiling(139/m).

Still referring to Figure 6, random access channel planning node 400 may create 603 number of clusters, N$_{cluster}$, from site physical metadata where maintaining two conditions: Number of cells in each of the clusters ≤ MIN(m); and all cells of a site remain in the same cluster. For cluster number = x, random access channel planning node 400 may select 605 RSI group L$_A$, where group number (GN) is GN = xMOD8.

Still referring to Figure 6, random access channel planning node 400 may, for a candidate cell S$_k$ in the cluster apply 607 inner method A. If k= = m-1, random access channel planning node 400 may determine 611 whether x = = (N$_{cluster}$ - 1). If k=0:m-1, random access channel planning node 400 may apply 607 inner method A for candidate cell S$_k$ in the cluster. If If k= = m-1, random access channel planning node 400 may determine 611 whether x = = (N$_{cluster}$ - 1). If random access channel planning node 400 determines 611 that x =0:(N$_{cluster}$ -1), If k= = m-1, random access channel planning node 400 may determine 611 whether x = = (N$_{cluster}$ - 1). If random access channel planning node 400 may, for cluster number = x, select 605 RSI group L$_A$, where group number (GN) is GN = xMOD8. If random access channel planning node 400 determines 611 that x = = (N$_{cluster}$ -1), random access channel planning node 400 ends the operations of the method of Figure 6.

To detect coverage-overlap of two cells, best coverage prediction plots from design tools may be used as an input. In the prediction plots, each cell may be represented by a polygon or multi-polygon object. Area of the coverage overlap may be calculated as the area of the intersection of two polygon(s) corresponding to the candidate cell and neighbor cell.

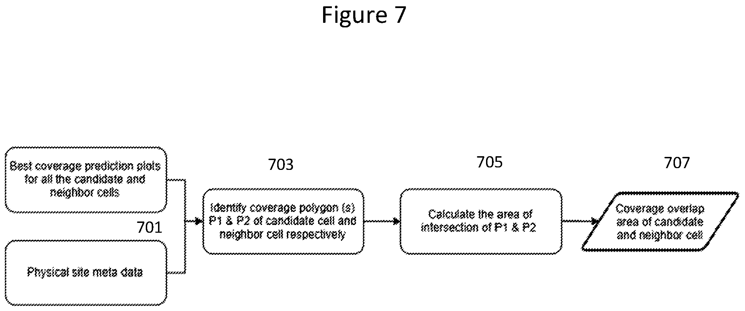

Figure 7 illustrates operations that may be performed by random access channel planning node 400 for coverage overlap detection based on predicted coverage polygon(s). Referring to Figure 7, input 701 to random access planning node 400, or to a node in communication with random access planning node 400, may include (1) best coverage production plots from a design tool(s) for all the candidate and neighbor cells, and (2) physical site meta data. Physical site meta data may include, but is not limited to, a location of the site (e.g., latitude and longitude of base station); azimuth of the a cell within a site; tilt angle of an antenna at the site; power of each radiating antenna at the site; height of an antenna at the site; type of antenna at the site; beam width of antenna at the site; etc.

Input 701 may be used to identify 703 coverage polygons (e.g., P1 and P2) of a candidate call and neighbor cell, respectively. The identified coverage polygons may be used to calculate 705 the area of intersection of the identified coverage polygons (e.g., area of intersection of P1 and P2). Calculation 705 results in a coverage overlap area 707 of the candidate cell and neighbor cell.

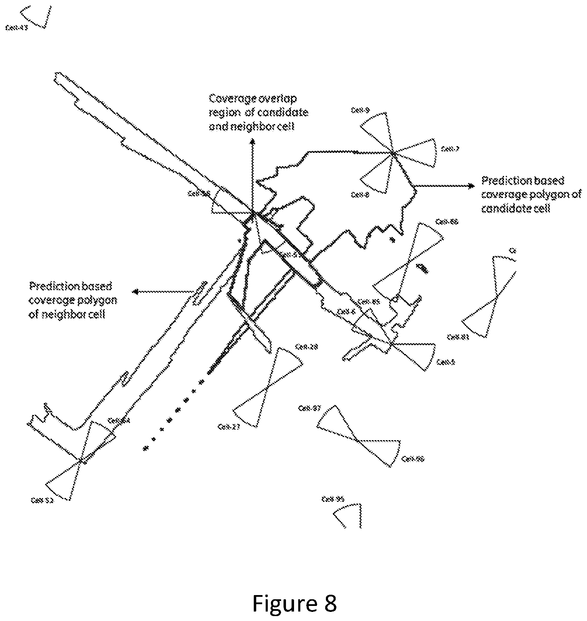

Figure 8 illustrates an exemplary coverage overlap detection based on predicted coverage polygons from performing the operations of Figure 7. Referring to Figure 8, prediction based coverage polygons are identified for a candidate call and a neighbor cell, respectively. The identified prediction based coverage polygons were used to calculate the area of intersection of the identified polygons. The area of intersection of the identified polygons is shown in Figure 6 by the area identified as coverage overlap region of candidate and neighbor cell.

For usage of all 139 RSI in a uniform manner in the exemplary coverage overlap of Figure 8, the following method may be used.

All RSIs may be grouped into a number of groups, where the separation of RSIs in each group ≥R$_{RSI}$.

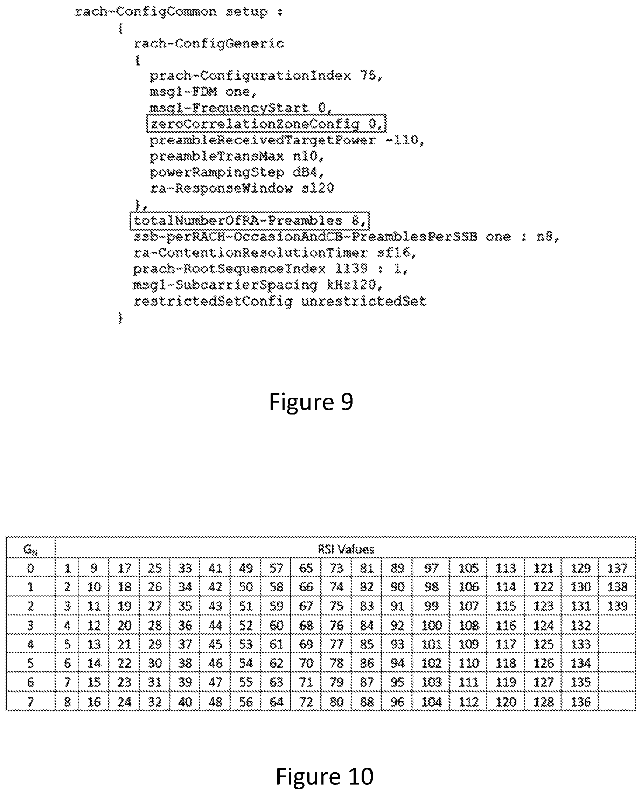

For mmW (High-Frequency bands above 6GHz), 8 RACH preambles may be supported with NCS = 0 and zeroCorrelationZoneConfig = 0. These preambles are generated using a short sequence with LRA = 139. Hence R$_{RSI}$=8. An exemplary RRC Reconfiguration message containing the information element (IE) rach-ConfigCommon setup is shown in Figure 9.

Figure 10 illustrates a table showing exemplary sets of RSI groups created from 139 RSIs for $R_{RSI}= 8$.

Using site physical metadata, a number of clusters ($N_{cluster}$) may be generated based on the nearest neighbor algorithm so that each cluster meets two requirements: (1) Number of cells in each of the clusters does not exceed 17; and (2) All the cells of a site remain in the same cluster.

An allocation process may iterate through each cluster sequentially and allocate RSI from a group of RSIs meeting the following condition:

$$G_N = n_{cluster} \text{ MOD } 8$$

Where:

$G_N$ = Group Number
$n_{cluster}$ = Cluster number [0,1,2 ..., $N_{cluster}$ - 1]

For example, if a cluster number is 9 then Grr=1 is used, i.e. $L_A$ in Figure 6 becomes $L_A$= [2, 10, 18, 26, 34, 42, 50, 58, 66, 74, 82, 90, 98, 106, 114, 122, 130, 138].

Resolving RACH collision in an operational network will now be described. An overall method for an operational network is similar to inner method A, with two adaptations described below.

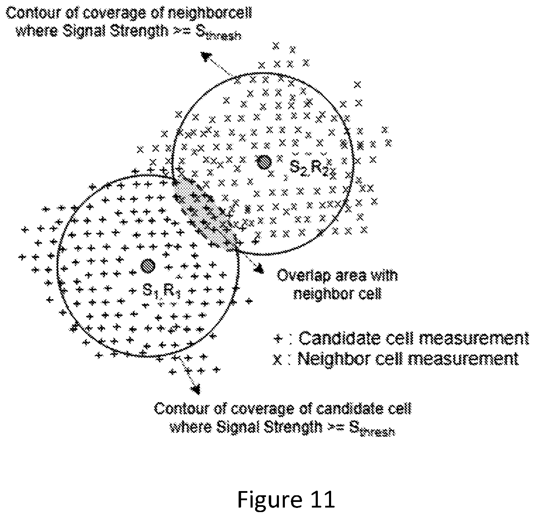

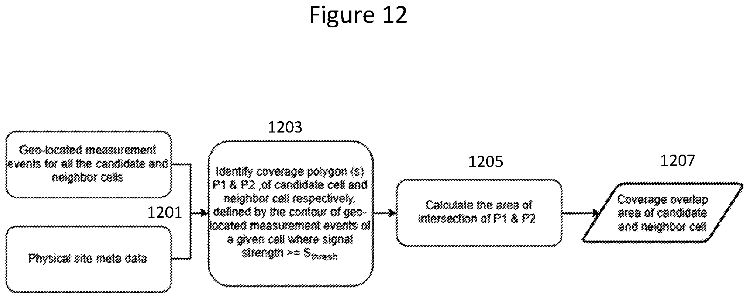

First, to detect a coverage-overlap between a candidate and neighbor cell, geolocated measurement reports may be used to identify a coverage-polygon of each cell. Figures 11 and 12 illustrate a method of detecting coverage overlap based on geolocated measurement events from a candidate and a neighbor cell. Figure 11 illustrates an exemplary coverage overlap detection based on geo-located measurement events from a candidate cell and a neighbor cell. Referring to Figure 11, the contour is shown of coverage of a candidate cell where signal strength $\geq S_{thresh}$. The "+" marks shown in Figure 11 illustrate candidate cell measurement events. Figure 11 further illustrates the contour of coverage of a neighbor cell where signal strength $\geq S_{thres}$. An overlap area of the candidate cell with the the eighbor cell is shown in the shaded area of Figure 11.

Figure 12 illustrates a process for coverage overlap detection based on geo-located measurement events from the candidate cell and neighbor cell illustrated in Figure 11. Referring to Figure 12, input 1201 to random access planning node 400, or to a node in communication with random access planning node 400, may include (1) geo-located measurement events for all the candidate and neighbor cells, and (2) physical site meta data. Physical site meta data may include, but is not limited to, a location of the site (e.g., latitude and longitude of base station); azimuth of the a cell within a site; tilt angle of an antenna at the site; power of each radiating antenna at the site; height of an antenna at the site; type of antenna at the site; beamwidth of antenna at the site; etc.

Input 1201 may be used to identify 1203 coverage polygons (e.g., P1 and P2) of a candidate call and neighbor cell, respectively, defined by the contour of geo-located measurement events of a given cell where signal strength $\geq S_{thres}$. The identified coverage polygons may be used to calculate 1205 the area of intersection of the identified coverage polygons (e.g., area of intersection of P1 and P2). Calculation 1205 results in a coverage overlap area 1107 of the candidate cell and neighbor cell

Second, unlike the method for green-field RSI planning, the selection of $L_A$ in an operational network includes all 139 RSIs. Thus, in an operational network, $L_A$= 1, 2, 3, 4 ...., 139] is used in inner method A.

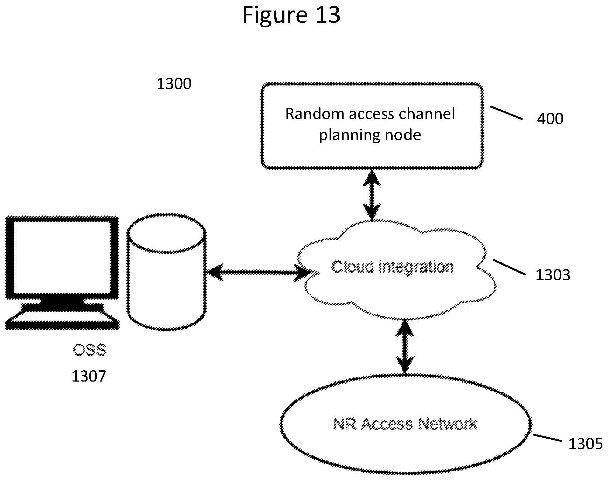

Figure 13 illustrates cloud integration 103 of random access planning node 400 for a NR access communication network 1305 in accordance with some embodiments of the present disclosure. Random access planning node 400 may be used in a method to detect coverage overlap of a cell with a neighboring cell and use this information for RSI allocation with minimum or reduced probability of RACH collision. Coverage overlap detection may be performed in at least two ways. One method may be useful in RSI planning for green-field NR deployment, while the other method may be useful in resolving RACH collision in an operational NR network. As illustrated in Figure 13, methods performed by random access channel planning node 400 may be deployed in the cloud by at least one processor 401 of random access channel planning node 400 performing operations by executing software.

While Figure 13 illustrates a cloud implementation, random access channel planning node 400 may be located directly in a communication network, such as NR access network 1305. Random access channel planning node 400 may automatically perform methods described herein and may implement changes in network configuration in real-time.

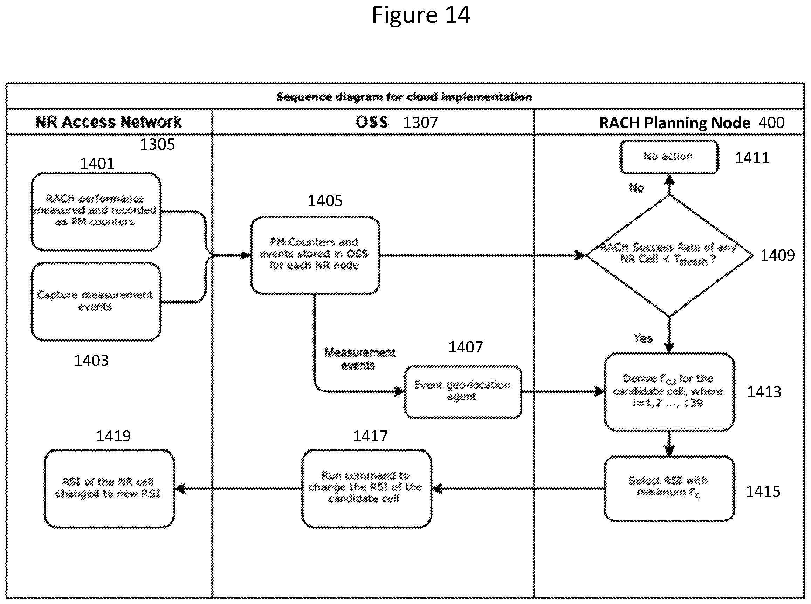

Figure 14 illustrates a sequence diagram of operations and interactions of a NR access network/node 1305, an object storage service (OSS) 1307 in the cloud, and random access channel planning node 400, as configured for example in Figure 13.

Referring to Figure 14, a NR access network (e.g., a node of a communication network) 1305 may measure 1401 events including RACH performance and record 1401 the measurements as performance management (PM) counters of base stations/cells. The NR access network 1305 may capture 1403 the measurement events 1401. The measurements events of 1401 and 1403 may be provided to input of OSS 1307. OSS 1307 may store 1405 the PM counters and events for each NR node 1305. OSS 1307 may provide 1307 the measurement events to an event geo-location agent.

Still referring to Figure 14, OSS 1307 also may provide the PM counters and measurement events to random access channel planning node 400. Random access channel planning node 400 may determine 1409 whether the RACH success rate of any NR cell is less than a threshold value, $T_{thresh}$. If the RACH success rate of any NR cell is not less than the $T_{thres}$, no action 1411 may be taken.

If, however, the RACH success rate of any NR cell is greater than the $T_{thres}$, random access channel planning node 400 may derive 1413 $F_{c,i}$ for the candidate cell, where i = 1, 2 ..., 139. Random access channel planning node 400 may select the RSI with the minimum $F_c$.

Still referring to Figure 14, random access channel planning node 400 may provide the selected RSI with the minimum $F_c$ to OSS 1307. OSS 1307 may run and send 1417 a command(s) to NR access network 1305 to change the RSI of the candidate cell to the selected RSI with the minimum $F_c$. NR access network 1305 may change 1419 the RSI of the NR cell to the new RSI corresponding to the selected RSI with the minimum $F_c$.

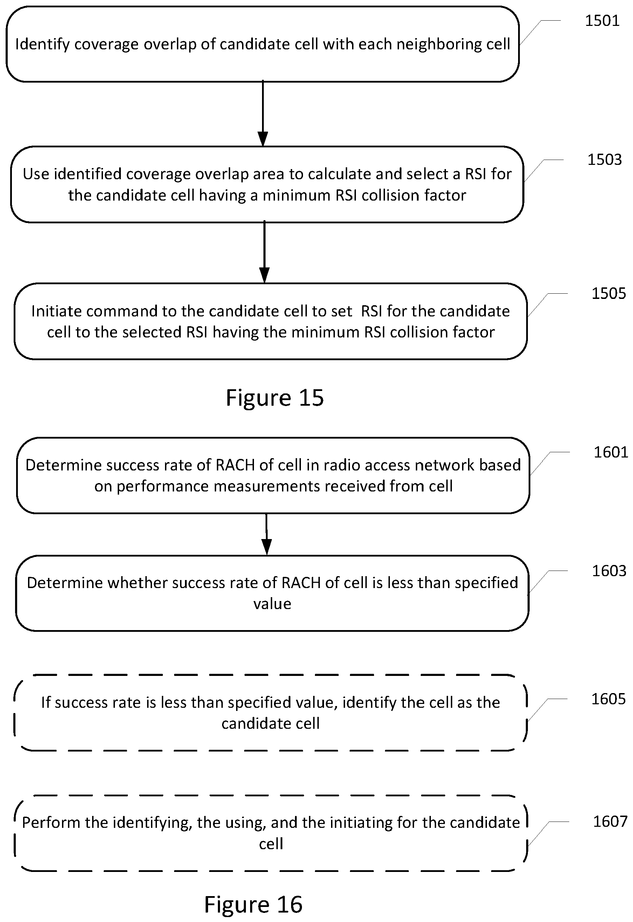

Operations of a random access channel planning node (implemented using the structure of the block diagram of Figure 4) will now be discussed with reference to the flow charts of Figure 15-16 according to some embodiments of inventive concepts. For example, modules may be stored in at least one memory 403 of Figure 4, and these modules may provide instructions so that when the instructions of a modules are executed by at least one processor 401, at least one processor 401 performs respective operations of the flow charts.

Referring initially to Figure 15, operations are performed by a random access channel planning node (e.g., 400) in a communication network (e.g., 1305 in Figure 13). The operations include identifying 1501 a coverage overlap area of a candidate cell with each of the neighboring cells of the candidate cell in a radio access network. The operations further include using 1503 the identified coverage overlap area to determine a root sequence index for the candidate cell having a minimum root sequence index collision factor. The operations further include initiating 1505 a command to the candidate cell to set the root sequence index for the candidate cell to the determined root sequence index having the minimum root sequence index collision factor.

Referring to Figure 16, in at least some embodiments, the operations may further include determining 1601 a success rate of a random access channel of a cell in the radio access network based on performance measurements received from the cell. The operations may further include determining 1603 whether the success rate of the random access channel of the cell is less than a specified value.

In at least some embodiments, the operations may further include if the success rate of the random access channel of the cell is less than the specified value, identifying 1605 the cell as the candidate cell. The operations may further include performing 1607 the identifying, the using, and the initiating for the candidate cell.

The operations from the flow chart of Figure 16 may be optional with respect to some embodiments.

Aspects of the present disclosure have been described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

It is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

**Claims**

1. A method performed by a random access channel planning node (400) in a communication network (1305), the method comprising:

identifying (1501) a coverage overlap area of a candidate cell with each of the neighboring cells of the candidate cell in a radio access network;
using (1503) the identified coverage overlap area to determine a root sequence index for the candidate cell having a minimum root sequence index collision factor; and
initiating (1505) a command to the candidate cell to set the root sequence index for the candidate cell to the determined root sequence index having the minimum root sequence index collision factor;
wherein the using (1503) comprises:

preparing (303) a first list of root sequence indexes for neighboring cells having coverage overlap areas with the candidate cell;
deriving (305) a second list of the root sequence indexes from the first list, wherein the number of root sequence indexes in the second list is based on a defined number of root sequence indexes for generating a defined number of preambles for the candidate cell;
calculating (307) a root sequence index collision factor for the candidate cell for each root sequence index in the second list; and
determining (307) the root sequence index having the minimum root sequence index collision factor for the candidate cell;
the method **characterized in that** the deriving (305) a second list of the root sequence indexes from the first list comprises calculating a subset of the root sequence indexes, $L_{CAND}$, from the first list to generate a defined number of random access channel preambles for the candidate cell; and

wherein each root sequence index for the candidate cell, $P_{RSI}$, is included in the subset, $L_{CAND}$, so that an absolute value of a difference between each root sequence index for the candidate cell, $P_{RSI}$, and each root sequence index for a neighbor cell, $N_{RSI}$, having a coverage overlap area with the candidate cell, $N_n$, is less than $R_{RSI}$, the defined number of root sequence indexes for generating a defined number of preambles for the candidate cell.

2. The method of Claim 1, wherein the identifying (1501) comprises:

for each of the candidate cell and the neighboring cells of the candidate cell, obtaining (701) a coverage prediction plot and physical site meta data for the candidate cell and the neighboring cells for a greenfield radio access network;
for each of the candidate cell and the neighboring cells of the candidate cell, identifying (703) a coverage polygon for the candidate cell and the neighboring cells of the candidate cell based on the coverage prediction plot and the physical site meta data for the candidate cell and the neighboring cells of the candidate cell;
calculating (705) an area of intersection of the identified coverage polygons for the candidate cell and the neighboring cells of the candidate cell; and
identifying (707) the calculated area of intersection as the coverage overlap area of the candidate cell with the neighboring cells of the candidate cell.

3. The method of Claim 1, wherein calculating (307) the root sequence index collision factor for the candidate cell for each root sequence index in the second list comprises:
calculating the root sequence index collision factor, Fc, for each root sequence index included in the second list using the equation

$$Fc = \frac{\sum_{n=1}^{x} Area\ of\ coverage\ overlap\ with\ Neighbor\ cell\ with\ abs(P_{RSI} - N_n) < R_{RSI}}{Total\ coverage\ area\ of\ candidate\ cell}$$

4. The method of any of Claims 1 to 3, further comprising:

creating (601) a plurality of groups of all root sequence indexes for all cells of the greenfield radio access network, wherein each group has a group number and includes a defined subset of all of the root sequence indexes;

generating (603) a number of clusters of all of the cells of the greenfield radio access network based on physical site meta data of all of the cells, wherein each cluster comprises a subset of all of the cells defined by the minimum count of root sequence indexes in the created groups (601) and where all cells of a site of the greenfield communication network remain in the same cluster;

for each cluster, selecting (605) the group number that is equal to (cluster number)MOD (the defined number of random access channel preambles for the candidate cell);

repeating (607) for a cluster candidate cell in each cluster, the identifying, the using, and the initiating for the cluster candidate cell in each cluster.

5. The method of Claim 1, wherein the identifying comprises:

for each of the candidate cell and the neighboring cells of the candidate cell, obtaining (1201) geo-located measurements and physical site meta data from the communication network for the candidate cell and the neighboring cells of the candidate cell for an operational radio access network;

for each of the candidate cell and the neighboring cells of the candidate cell, identifying (1203) a coverage polygon of the candidate cell and the neighboring cells of the candidate cell based on a contour of the geo-located measurements and the physical meta data for the candidate cell and the neighboring cells of the candidate cell where signal strength is greater than or equal to a defined signal strength;

calculating (1205) an area of intersection of the identified coverage polygons for the candidate cell and the neighboring cells of the candidate cell; and

identifying (1207) the calculated area of intersection as the coverage overlap area of the candidate cell with the neighboring cells of the candidate cell.

6. The method of Claim 5, wherein the deriving (305) the second list of root sequence indexes from the first list comprises all of the root sequence indexes from the first list.

7. The method of any of Claims 1 to 6, further comprising:

determining (1601) a success rate of a random access channel of a cell in the radio access network based on performance measurements received from the cell; and

determining (1603) whether the success rate of the random access channel of the cell is less than a specified value.

8. The method of Claim 7, further comprising:

if the success rate of the random access channel of the cell is less than the specified value, identifying (1605) the cell as the candidate cell; and

performing (1607) the identifying, the using, and the initiating for the candidate cell.

9. A random access channel planning node (400), the random access planning node comprising:

at least one processor (401); and

at least one memory (403) connected to the at least one processor and storing program code that is executed by the at least one processor to perform operations comprising:

identifying (1501) a coverage overlap area of a candidate cell with each of the neighboring cells of the candidate cell in a radio access network;

using (1503) the identified coverage overlap area to determine a root sequence index for the candidate cell having a minimum root sequence index collision factor; and

initiating (1505) a command to the candidate cell to set the root sequence index for the candidate cell to the determined root sequence index having the minimum root sequence index collision factor;

wherein the using (1503) comprises:

preparing (303) a first list of root sequence indexes for neighboring cells having coverage overlap areas with the candidate cell;

deriving (305) a second list of the root sequence indexes from the first list, wherein the number of root sequence indexes in the second list is based on a defined number of root sequence indexes for generating a defined number of preambles for the candidate cell;

calculating (307) a root sequence index collision factor for the candidate cell for each root sequence index in the second list; and

determining (307) the root sequence index having the minimum root sequence index collision factor for the candidate cell;

the random access channel planning node **characterized in that** the deriving (305) a second list of the root sequence indexes from the first list comprises calculating a subset of the root sequence indexes, $L_{CAND}$, from the first list to generate a defined number of random access channel preambles for the candidate cell; and

wherein each root sequence index for the candidate cell, $P_{RSI}$, is included in the subset, $L_{CAND}$, so that an absolute value of a difference between each root sequence index for the candidate cell, $P_{RSI}$, and each root sequence index for a neighbor cell, $N_{RSI}$, having a coverage overlap area with the candidate cell, $N_n$, is less than $R_{RSI}$, the defined number of root sequence indexes for generating a defined number of preambles for the candidate cell.

10. The random access channel planning node of Claim 9, wherein the identifying (1501) comprises:

for each of the candidate cell and the neighboring cells of the candidate cell, obtaining (701) a coverage prediction plot and physical site meta data for the candidate cell and the neighboring cells for a greenfield radio access network;

for each of the candidate cell and the neighboring cells of the candidate cell, identifying (703) a coverage polygon for the candidate cell and the neighboring cells of the candidate cell based on the coverage prediction plot and the physical site meta data for the candidate cell and the neighboring cells of the candidate cell;

calculating (705) an area of intersection of the identified coverage polygons for the candidate cell and the neighboring cells of the candidate cell; and

identifying (707) the calculated area of intersection as the coverage overlap area of the candidate cell with the neighboring cells of the candidate cell.

11. The random access channel planning node of Claim 9, wherein calculating (307) the root sequence index collision factor for the candidate cell for each root sequence index in the second list comprises:

calculating the root sequence index collision factor, Fc, for each root sequence index included in the second list using the equation

$$Fc = \frac{\sum_{n=1}^{x} Area\ of\ coverage\ overlap\ with\ Neighbor\ cell\ with\ abs(P_{RSI} - N_n) < R_{RSI}}{Total\ coverage\ area\ of\ candidate\ cell}$$

12. The random access channel planning node of any of Claims 9 to 11, further comprising:

creating (601) a plurality of groups of all root sequence indexes for all cells of the greenfield radio access network, wherein each group has a group number and includes a defined subset of all of the root sequence indexes;

generating (603) a number of clusters of all of the cells of the greenfield radio access network based on physical site meta data of all of the cells, wherein each cluster comprises a subset of all of the cells defined by the minimum count of root sequence indexes in the created groups (601) and where all cells of a site of the greenfield communication network remain in the same cluster;

for each cluster, selecting (605) the group number that is equal to (cluster number)MOD (the defined number of random access channel preambles for the candidate cell); and

repeating (607) for a cluster candidate cell in each cluster, the identifying, the using, and the initiating for the cluster candidate cell in each cluster.

**13.** The random access channel planning node of Claim 9, wherein the identifying comprises:

for each of the candidate cell and the neighboring cells of the candidate cell, obtaining (1201) geo-located measurements and physical site meta data from the communication network for the candidate cell and the neighboring cells of the candidate cell for an operational radio access network;
for each of the candidate cell and the neighboring cells of the candidate cell, identifying (1203) a coverage polygon of the candidate cell and the neighboring cells of the candidate cell based on a contour of the geo-located measurements and the physical meta data for the candidate cell and the neighboring cells of the candidate cell where signal strength is greater than or equal to a defined signal strength;
calculating (1205) an area of intersection of the identified coverage polygons for the candidate cell and the neighboring cells of the candidate cell; and
identifying (1207) the calculated area of intersection as the coverage overlap area of the candidate cell with the neighboring cells of the candidate cell.

**14.** The random access channel planning node of Claim 13, wherein the deriving (305) the second list of root sequence indexes from the first list comprises all of the root sequence indexes from the first list.

**15.** The random access channel planning node of any of Claims 9 to 14, further comprising:

determining (1601) a success rate of a random access channel of a cell in the radio access network based on performance measurements received from the cell; and
determining (1603) whether the success rate of the random access channel of the cell is less than a specified value.

**Patentansprüche**

**1.** Verfahren, das von einem Direktzugriffskanalplanungsknoten (400) in einem Kommunikationsnetzwerk (1305) durchgeführt wird, wobei das Verfahren umfasst:

Identifizieren (1501) eines Bedeckungsüberlappungsbereichs einer Kandidatenzelle mit jeder der Nachbarzellen der Kandidatenzelle in einem Funkzugangsnetzwerk;
Verwenden (1503) des identifizierten Bedeckungsüberlappungsbereichs zum Bestimmen eines Wurzelsequenzindex für die Kandidatenzelle mit einem minimalen Wurzelsequenzindex-Kollisionsfaktor;
Initiieren (1505) eines Befehls an die Kandidatenzelle, um den Wurzelsequenzindex auf den bestimmten Wurzelsequenzindex mit dem minimalen Wurzelsequenzindex-Kollisionsfaktor zu setzen;
wobei das Verwenden (1503) umfasst:

Erstellen (303) einer ersten Liste von Wurzelsequenzindizes für Nachbarzellen mit Bedeckungsüberlappungsbereichen mit der Kandidatenzelle;
Ableiten (305) einer zweiten Liste der Wurzelsequenzindizes von der ersten Liste, wobei die Anzahl von Wurzelsequenzindizes in der zweiten Liste auf einer definierten Anzahl von Wurzelsequenzindizes zum Erzeugen einer definierten Anzahl von Präambeln für die Kandidatenzelle basiert;
Berechnen (307) eines Wurzelsequenzindex-Kollisionsfaktors für die Kandidatenzelle für jeden Wurzelsequenzindex in der zweiten Liste; und
Bestimmen (307) des Wurzelsequenzindex mit dem minimalen Wurzelsequenzindex-Kollisionsfaktor für die Kandidatenzelle;

wobei das Verfahren **dadurch gekennzeichnet ist, dass**
das Ableiten (305) einer zweiten Liste der Wurzelsequenzindizes von der ersten Liste ein Berechnen einer Teilmenge der Wurzelsequenzindizes $L_{CAND}$ von der ersten Liste zum Erzeugen einer definierten Anzahl von Direktzugriffskanalpräambeln für die Kandidatenzelle umfasst; und
wobei jeder Wurzelsequenzindex für die Kandidatenzelle $P_{RSI}$ in der Teilmenge $L_{CAND}$ enthalten ist, sodass ein absoluter Wert einer Differenz zwischen jedem Wurzelsequenzindex für die Kandidatenzelle $P_{RSI}$ und jeder Wurzelsequenzindex für eine Nachbarzelle $N_{RSI}$ mit einem Bedeckungsüberlappungsbereich mit der Kandida-

tenzelle $N_n$ kleiner als $R_{RSI}$ ist, wobei die definierte Anzahl von Wurzelsequenzindizes zum Erzeugen einer definierten Anzahl von Präambeln für die Kandidatenzelle ist.

2. Verfahren nach Anspruch 1, wobei das Identifizieren (1501) umfasst:

Erhalten (701) für jede der Kandidatenzelle und der Nachbarzellen der Kandidatenzelle eines Bedeckungsvorhersageplots und von Metadaten des physischen Standorts für die Kandidatenzelle und die Nachbarzellen für ein Greenfield-Funkzugangsnetzwerk;
Identifizieren (703) für jede der Kandidatenzelle und der Nachbarzellen der Kandidatenzelle eines Bedeckungspolygons für die Kandidatenzelle und die Nachbarzellen der Kandidatenzelle basierend auf dem Bedeckungsvorhersageplot und den Metadaten des physischen Standorts für die Kandidatenzelle und die Nachbarzellen der Kandidatenzelle;
Berechnen (705) eines Schnittbereichs der identifizierten Bedeckungspolygone für die Kandidatenzelle und die Nachbarzellen der Kandidatenzelle; und
Identifizieren (707) des berechneten Schnittbereichs als den Bedeckungsüberlappungsbereich der Kandidatenzelle mit den Nachbarzellen der Kandidatenzelle.

3. Verfahren nach Anspruch 1, wobei das Berechnen (307) des Wurzelsequenzindex-Kollisionsfaktors für die Kandidatenzelle für jeden Wurzelsequenzindex in der zweiten Liste umfasst:

Berechnen des Wurzelsequenzindex-Kollisionsfaktors Fc für jeden in der zweiten Liste enthaltenen Wurzelsequenzindex unter Verwendung der folgenden Gleichung:

$$Fc = \frac{\sum_{n=1}^{x} Bereich\ von\ Bedeckungsüberlappung\ mit\ Nachbarzelle\ mit\ abs(P_{RSI} - N_n) < R_{RSI}}{Gesamtüberlappungsbereich\ von\ Kandidatenzelle}$$

4. Verfahren nach einem der Ansprüche 1 bis 3, ferner umfassend:

Bilden (601) einer Mehrzahl von Gruppen aller Wurzelsequenzindizes für alle Zellen des Greenfield-Funkzugangsnetzwerks, wobei jede Gruppe eine Gruppennummer aufweist und eine definierte Teilmenge aller der Wurzelsequenzindizes umfasst;
Erzeugen (603) einer Anzahl von Clustern aller der Zellen des Greenfield-Funkzugangsnetzwerks basierend auf den Metadaten des physischen Standorts aller der Zellen, wobei jeder Cluster eine Teilmenge aller der Zellen umfasst, die durch die Mindestzahl von Wurzelsequenzindizes in den gebildeten Gruppen (601) definiert ist, und wobei alle Zellen eines Standorts des Greenfield-Kommunikationsnetzwerks im gleichen Cluster bleiben;
Auswählen (605) der Gruppennummer, die gleich (Cluster-Nummer)MOD(definierte Anzahl von Direktzugriffskanalpräambeln für die Kandidatenzelle) ist, für jeden Cluster;
Wiederholen (607) für eine Cluster-Kandidatenzelle in jedem Cluster des Identifizierens, des Verwendens und des Initiierens für die Cluster-Kandidatenzellen in jedem Cluster.

5. Verfahren nach Anspruch 1, wobei das Identifizieren umfasst:

Erhalten (1201) für jede der Kandidatenzelle und der Nachbarzellen der Kandidatenzelle von Geolokationsmessungen und Metadaten des physischen Standorts vom Kommunikationsnetzwerk für die Kandidatenzelle und die Nachbarzellen der Kandidatenzelle für ein funktionsfähiges Funkzugangsnetzwerk;
Identifizieren (1203) für jede der Kandidatenzelle und der Nachbarzellen der Kandidatenzelle eines Bedeckungspolygons der Kandidatenzelle und der Nachbarzellen der Kandidatenzelle basierend auf einem Profil der Geolokationsmessungen und der Metadaten des physischen Standorts für die Kandidatenzelle und die Nachbarzellen der Kandidatenzelle, in denen die Signalstärke größer oder gleich einer definierten Signalstärke ist;
Berechnen (1205) eines Schnittbereichs der identifizierten Bedeckungspolygone für die Kandidatenzelle und die Nachbarzellen der Kandidatenzelle; und
Identifizieren (1207) des berechneten Schnittbereichs als den Bedeckungsüberlappungsbereich der Kandidatenzelle mit den Nachbarzellen der Kandidatenzelle.

6. Verfahren nach Anspruch 5, wobei das Ableiten (305) der zweiten Liste von Wurzelsequenzindizes von der ersten Liste alle der Wurzelsequenzindizes von der Liste umfasst.

7. Verfahren nach einem der Ansprüche 1 bis 6, ferner umfassend:

Bestimmen (1601) einer Erfolgsrate eines Direktzugriffskanals einer Zelle im Funkzugangsnetzwerk basierend auf Leistungsmessungen, die von der Zelle empfangen werden; und

Bestimmen (1603), ob die Erfolgsrate des Direktzugriffskanals der Zelle niedriger als ein spezifizierter Wert ist.

8. Verfahren nach Anspruch 7, ferner umfassend:

Identifizieren (1605) der Zelle als die Kandidatenzelle, wenn die Erfolgsrate des Direktzugriffskanals der Zelle niedriger als der spezifizierte Wert ist; und

Durchführen (1607) des Identifizierens, des Verwendens und des Initiierens für die Kandidatenzelle.

9. Direktzugriffskanalplanungsknoten (400), wobei der Direktzugriffskanalplanungsknoten umfasst:

mindestens einen Prozessor (401); und

mindestens einen Speicher (403), der mit dem mindestens einen Prozessor verbunden ist und Programmcode speichert, der von dem mindestens einen Prozessor ausgeführt wird, um Operationen durchführen, die umfassen:

Identifizieren (1501) eines Bedeckungsüberlappungsbereichs einer Kandidatenzelle mit jeder der Nachbarzellen der Kandidatenzelle in einem Funkzugangsnetzwerk;

Verwenden (1503) des identifizierten Bedeckungsüberlappungsbereichs zum Bestimmen eines Wurzelsequenzindex für die Kandidatenzelle mit einem minimalen Wurzelsequenzindex-Kollisionsfaktor;

Initiieren (1505) eines Befehls an die Kandidatenzelle, um den Wurzelsequenzindex auf den bestimmten Wurzelsequenzindex mit dem minimalen Wurzelsequenzindex-Kollisionsfaktor zu setzen;

wobei das Verwenden (1503) umfasst:

Erstellen (303) einer ersten Liste von Wurzelsequenzindizes für Nachbarzellen mit Bedeckungsüberlappungsbereichen mit der Kandidaten;

Ableiten (305) einer zweiten Liste der Wurzelsequenzindizes von der ersten Liste, wobei die Anzahl von Wurzelsequenzindizes in der zweiten Liste auf einer definierten Anzahl von Wurzelsequenzindizes zum Erzeugen einer definierten Anzahl von Präambeln für die Kandidatenzelle basiert;

Berechnen (307) eines Wurzelsequenzindex-Kollisionsfaktors für die Kandidatenzelle für jeden Wurzelsequenzindex in der zweiten Liste; und

Bestimmen (307) des Wurzelsequenzindex mit dem minimalen Wurzelsequenzindex-Kollisionsfaktor für die Kandidatenzelle;

wobei der Direktzugriffskanalplanungsknoten **dadurch gekennzeichnet ist, dass**

das Ableiten (305) einer zweiten Liste der Wurzelsequenzindizes von der ersten Liste ein Berechnen einer Teilmenge der Wurzelsequenzindizes $L_{CAND}$ von der ersten Liste zum Erzeugen einer definierten Anzahl von Direktzugriffskanalpräambeln für die Kandidatenzelle umfasst; und

wobei jeder Wurzelsequenzindex für die Kandidatenzelle $P_{RSI}$ in der Teilmenge $L_{CAND}$ enthalten ist, sodass ein absoluter Wert einer Differenz zwischen jedem Wurzelsequenzindex für die Kandidatenzelle $P_{RSI}$ und jeder Wurzelsequenzindex für eine Nachbarzelle $N_{RSI}$ mit einem Bedeckungsüberlappungsbereich mit der Kandidatenzelle $N_n$ kleiner als $R_{RSI}$ ist, wobei die definierte Anzahl von Wurzelsequenzindizes zum Erzeugen einer definierten Anzahl von Präambeln für die Kandidatenzelle ist.

10. Direktzugriffskanalplanungsknoten nach Anspruch 9, wobei das Identifizieren (1501) umfasst:

Erhalten (701) für jede der Kandidatenzelle und der Nachbarzellen der Kandidatenzelle eines Bedeckungsvorhersageplots und von Metadaten des physischen Standorts für die Kandidatenzelle und die Nachbarzellen für ein Greenfield-Funkzugangsnetzwerk;

Identifizieren (703) für jede der Kandidatenzelle und der Nachbarzellen der Kandidatenzelle eines Bedeckungspolygons für die Kandidatenzelle und die Nachbarzellen der Kandidatenzelle basierend auf dem Bedeckungsvorhersageplot und den Metadaten des physischen Standorts für die Kandidatenzelle und die Nachbarzellen der Kandidatenzelle;

Berechnen (705) eines Schnittbereichs der identifizierten Bedeckungspolygone für die Kandidatenzelle und die Nachbarzellen der Kandidatenzelle; und

Identifizieren (707) des berechneten Schnittbereichs als den Bedeckungsüberlappungsbereich der Kandidatenzelle mit den Nachbarzellen der Kandidatenzelle.

**11.** Direktzugriffskanalplanungsknoten nach Anspruch 9, wobei das Berechnen (307) des Wurzelsequenzindex-Kollisionsfaktors für die Kandidatenzelle für jeden Wurzelsequenzindex in der zweiten Liste umfasst:
Berechnen des Wurzelsequenzindex-Kollisionsfaktors Fc für jeden in der zweiten Liste enthaltenen Wurzelsequenzindex unter Verwendung der folgenden Gleichung:

$$Fc = \frac{\sum_{n=1}^{x} Bereich\ von\ Bedeckungs\ddot{u}berlappung\ mit\ Nachbarzelle\ mit\ abs(P_{RSI} - N_n) < R_{RSI}}{Gesamt\ddot{u}berlappungsbereich\ von\ Kandidatenzelle}$$

**12.** Direktzugriffskanalplanungsknoten nach einem der Ansprüche 9 bis 11, ferner umfassend:

Bilden (601) einer Mehrzahl von Gruppen aller Wurzelsequenzindizes für alle Zellen des Greenfield-Funkzugangsnetzwerks, wobei jede Gruppe eine Gruppennummer aufweist und eine definierte Teilmenge aller der Wurzelsequenzindizes umfasst;
Erzeugen (603) einer Anzahl von Clustern aller der Zellen des Greenfield-Funkzugangsnetzwerks basierend auf den Metadaten des physischen Standorts aller der Zellen, wobei jeder Cluster eine Teilmenge aller der Zellen umfasst, die durch die Mindestzahl von Wurzelsequenzindizes in den gebildeten Gruppen (601) definiert ist, und wobei alle Zellen eines Standorts des Greenfield-Kommunikationsnetzwerks im gleichen Cluster bleiben;
Auswählen (605) der Gruppennummer, die gleich (Cluster-Nummer)MOD(definierte Anzahl von Direktzugriffskanalpräambeln für die Kandidatenzelle) ist, für jeden Cluster; und
Wiederholen (607) für eine Cluster-Kandidatenzelle in jedem Cluster des Identifizierens, des Verwendens und des Initiierens für die Cluster-Kandidatenzellen in jedem Cluster.

**13.** Direktzugriffskanalplanungsknoten nach Anspruch 9, wobei das Identifizieren umfasst:

Erhalten (1201) für jede der Kandidatenzelle und der Nachbarzellen der Kandidatenzelle von Geolokationsmessungen und Metadaten des physischen Standorts vom Kommunikationsnetzwerk für die Kandidatenzelle und die Nachbarzellen für ein funktionsfähiges Funkzugangsnetzwerk;
Identifizieren (1203) für jede der Kandidatenzelle und der Nachbarzellen der Kandidatenzelle eines Bedeckungspolygons der Kandidatenzelle und der Nachbarzellen der Kandidatenzelle basierend auf einem Profil der Geolokationsmessungen und der Metadaten des physischen Standorts für die Kandidatenzelle und die Nachbarzellen der Kandidatenzelle, in denen die Signalstärke größer oder gleich einer definierten Signalstärke ist;
Berechnen (1205) eines Schnittbereichs der identifizierten Bedeckungspolygone für die Kandidatenzelle und die Nachbarzellen der Kandidatenzelle; und
Identifizieren (1207) des berechneten Schnittbereichs als den Bedeckungsüberlappungsbereich der Kandidatenzelle mit den Nachbarzellen der Kandidatenzelle.

**14.** Direktzugriffskanalplanungsknoten nach Anspruch 13, wobei das Ableiten (305) der zweiten Liste von Wurzelsequenzindizes von der ersten Liste alle der Wurzelsequenzindizes von der Liste umfasst.

**15.** Direktzugriffskanalplanungsknoten nach einem der Ansprüche 9 bis 14, ferner umfassend:

Bestimmen (1601) einer Erfolgsrate eines Direktzugriffskanals einer Zelle im Funkzugangsnetzwerk basierend auf Leistungsmessungen, die von der Zelle empfangen werden; und
Bestimmen (1603), ob die Erfolgsrate des Direktzugriffskanals der Zelle niedriger als eine spezifizierter Wert ist.

**Revendications**

**1.** Procédé réalisé par un noeud de planification de canal d'accès aléatoire (400) dans un réseau de communication (1305), le procédé comprenant :

l'identification (1501) d'une zone de chevauchement de couverture d'une cellule candidate avec chacune des cellules voisines de la cellule candidate dans un réseau d'accès radio ;
l'utilisation (1503) de la zone de chevauchement de couverture identifiée pour déterminer un indice de séquence racine pour la cellule candidate ayant un facteur de collision d'indice de séquence racine minimal ; et
l'initiation (1505) d'une commande à la cellule candidate pour régler l'indice de séquence racine pour la cellule candidate à l'indice de séquence racine déterminé ayant le facteur de collision d'indice de séquence racine minimal ;
dans lequel l'utilisation (1503) comprend :

la préparation (303) d'une première liste d'indices de séquence racine pour des cellules voisines ayant des zones de chevauchement de couverture avec la cellule candidate ;
la déduction (305) d'une deuxième liste des indices de séquence racine à partir de la première liste, dans lequel le nombre d'indices de séquence racine dans la deuxième liste est basé sur un nombre défini d'indices de séquence racine pour générer un nombre défini de préambules pour la cellule candidate ;
le calcul (307) d'un facteur de collision d'indice de séquence racine pour la cellule candidate pour chaque indice de séquence racine dans la deuxième liste ; et
la détermination (307) de l'indice de séquence racine ayant le facteur de collision d'indice de séquence racine minimal pour la cellule candidate ;
le procédé étant **caractérisé en ce que**
la déduction (305) d'une deuxième liste des indices de séquence racine à partir de la première liste comprend le calcul d'un sous-ensemble des indices de séquence racine, $L_{CAND}$, à partir de la première liste pour générer un nombre défini de préambules de canal d'accès aléatoire pour la cellule candidate ; et
dans lequel chaque indice de séquence racine pour la cellule candidate, $P_{RSI}$, est inclus dans le sous-ensemble, $L_{CAND}$, de sorte qu'une valeur absolue d'une différence entre chaque indice de séquence racine pour la cellule candidate, $P_{RSI}$, et chaque indice de séquence racine pour une cellule voisine, $N_{RSI}$, ayant une zone de chevauchement de couverture avec la cellule candidate, $N_n$, soit inférieure à $R_{RSI}$, le nombre défini d'indices de séquence racine pour générer un nombre défini de préambules pour la cellule candidate.

**2.** Procédé selon la revendication 1, dans lequel l'identification (1501) comprend :

pour chacune de la cellule candidate et des cellules voisines de la cellule candidate, l'obtention (701) d'un tracé de prédiction de couverture et de métadonnées de site physique pour la cellule candidate et les cellules voisines pour un réseau d'accès radio Greenfield ;
pour chacune de la cellule candidate et des cellules voisines de la cellule candidate, l'identification (703) d'un polygone de couverture pour la cellule candidate et les cellules voisines de la cellule candidate sur la base du tracé de prédiction de couverture et des métadonnées de site physique pour la cellule candidate et les cellules voisines de la cellule candidate ;
le calcul (705) d'une zone d'intersection des polygones de couverture identifiés pour la cellule candidate et les cellules voisines de la cellule candidate ; et
l'identification (707) de la zone d'intersection calculée en tant que la zone de chevauchement de couverture de la cellule candidate avec les cellules voisines de la cellule candidate.

**3.** Procédé selon la revendication 1, dans lequel le calcul (307) du facteur de collision d'indice de séquence racine pour la cellule candidate pour chaque indice de séquence racine dans la deuxième liste comprend :
le calcul du facteur de collision d'indice de séquence racine, Fc, pour chaque indice de séquence racine inclus dans la deuxième liste en utilisant l'équation

$$Fc = \frac{\sum_{n=1}^{x} Zone\ de\ chevauchement\ de\ couverture\ avec\ cellule\ voisine\ avec\ abs(P_{RSI} - N_n) < R_{RSI}}{Zone\ de\ couverture\ totale\ de\ cellule\ candidate}$$

**4.** Procédé selon l'une quelconque des revendications 1 à 3, comprenant en outre :

la création (601) d'une pluralité de groupes de tous les indices de séquence racine pour toutes les cellules du réseau d'accès radio Greenfield, dans lequel chaque groupe a un numéro de groupe et inclut un sous-ensemble défini de tous les indices de séquence racine ;
la génération (603) d'un nombre de grappes de toutes les cellules du réseau d'accès radio Greenfield sur la base de métadonnées de site physique de toutes les cellules, dans lequel chaque grappe comprend un sous-ensemble de toutes les cellules définies par le décompte minimal d'indices de séquence racine dans les groupes (601) créés et où toutes les cellules d'un site du réseau d'accès radio Greenfield restent dans la même grappe ;
pour chaque grappe, la sélection (605) du numéro de groupe qui est égal à (numéro de grappe)MOD(le nombre défini de préambules de canal d'accès aléatoire pour la cellule candidate) ; et
la répétition (607), pour une cellule candidate de grappe dans chaque grappe, de l'identification, l'utilisation et l'initiation pour la cellule candidate de grappe dans chaque grappe.

5. Procédé selon la revendication 1, dans lequel l'identification comprend :

pour chacune de la cellule candidate et des cellules voisines de la cellule candidate, l'obtention (1201) de mesures géolocalisées et de métadonnées de site physique à partir du réseau de communication pour la cellule candidate et les cellules voisines de la cellule candidate pour un réseau d'accès radio opérationnel ;
pour chacune de la cellule candidate et des cellules voisines de la cellule candidate, l'identification (1203) d'un polygone de couverture de la cellule candidate et des cellules voisines de la cellule candidate sur la base d'un contour des mesures géolocalisées et des métadonnées de site physique pour la cellule candidate et les cellules voisines de la cellule candidate où une force de signal est supérieure ou égale à une force de signal définie ;
le calcul (1205) d'une zone d'intersection des polygones de couverture identifiés pour la cellule candidate et les cellules voisines de la cellule candidate ; et
l'identification (1207) de la zone d'intersection calculée en tant que la zone de chevauchement de couverture de la cellule candidate avec les cellules voisines de la cellule candidate.

6. Procédé selon la revendication 5, dans lequel la déduction (305) de la deuxième liste d'indices de séquence racine à partir de la première liste comprend tous les indices de séquence racine de la première liste.

7. Procédé selon l'une quelconque des revendications 1 à 6, comprenant en outre :

la détermination (1601) d'un taux de réussite d'un canal d'accès aléatoire d'une cellule dans le réseau d'accès radio sur la base de mesures de performance reçues depuis la cellule ; et
la détermination (1603) si le taux de réussite du canal d'accès aléatoire de la cellule est ou non inférieur à une valeur spécifiée.

8. Procédé selon la revendication 7, comprenant en outre :

si le taux de réussite du canal d'accès aléatoire de la cellule est inférieur à la valeur spécifiée, l'identification (1605) de la cellule en tant que la cellule candidate ; et
la réalisation (1607) de l'identification, l'utilisation et l'initiation pour la cellule candidate.

9. Noeud de planification de canal d'accès aléatoire (400), le noeud de planification de canal d'accès aléatoire comprenant :

au moins un processeur (401) ; et
au moins une mémoire (403) connectée à l'au moins un processeur et stockant un code de programme qui est exécuté par l'au moins un processeur pour réaliser des opérations comprenant :

l'identification (1501) d'une zone de chevauchement de couverture d'une cellule candidate avec chacune des cellules voisines de la cellule candidate dans un réseau d'accès radio ;
l'utilisation (1503) de la zone de chevauchement de couverture identifiée pour déterminer un indice de séquence racine pour la cellule candidate ayant un facteur de collision d'indice de séquence racine minimal ; et
l'initiation (1505) d'une commande à la cellule candidate pour régler l'indice de séquence racine pour la cellule candidate à l'indice de séquence racine déterminé ayant le facteur de collision d'indice de séquence racine minimal ;
dans lequel l'utilisation (1503) comprend :

la préparation (303) d'une première liste d'indices de séquence racine pour des cellules voisines ayant des zones de chevauchement de couverture avec la cellule candidate ;
la déduction (305) d'une deuxième liste des indices de séquence racine à partir de la première liste, dans lequel le nombre d'indices de séquence racine dans la deuxième liste est basé sur un nombre défini d'indices de séquence racine pour générer un nombre défini de préambules pour la cellule candidate ;
le calcul (307) d'un facteur de collision d'indice de séquence racine pour la cellule candidate pour chaque indice de séquence racine dans la deuxième liste ; et
la détermination (307) de l'indice de séquence racine ayant le facteur de collision d'indice de séquence racine minimal pour la cellule candidate ;

le noeud de planification de canal d'accès aléatoire étant **caractérisé en ce que**

la déduction (305) d'une deuxième liste des indices de séquence racine à partir de la première liste comprend le calcul d'un sous-ensemble des indices de séquence racine, $L_{CAND}$, à partir de la première liste pour générer un nombre défini de préambules de canal d'accès aléatoire pour la cellule candidate ; et

dans lequel chaque indice de séquence racine pour la cellule candidate, $P_{RSI}$, est inclus dans le sous-ensemble, $L_{CAND}$, de sorte qu'une valeur absolue d'une différence entre chaque indice de séquence racine pour la cellule candidate, $P_{RSI}$, et chaque indice de séquence racine pour une cellule voisine, $N_{RSI}$, ayant une zone de chevauchement de couverture avec la cellule candidate, $N_n$, soit inférieure à $R_{RSI}$, le nombre défini d'indices de séquence racine pour générer un nombre défini de préambules pour la cellule candidate.

10. Noeud de planification de canal d'accès aléatoire selon la revendication 9, dans lequel l'identification (1501) comprend :

pour chacune de la cellule candidate et des cellules voisines de la cellule candidate, l'obtention (701) d'un tracé de prédiction de couverture et de métadonnées de site physique pour la cellule candidate et les cellules voisines pour un réseau d'accès radio Greenfield ;

pour chacune de la cellule candidate et des cellules voisines de la cellule candidate, l'identification (703) d'un polygone de couverture pour la cellule candidate et les cellules voisines de la cellule candidate sur la base du tracé de prédiction de couverture et des métadonnées de site physique pour la cellule candidate et les cellules voisines de la cellule candidate ;

le calcul (705) d'une zone d'intersection des polygones de couverture identifiés pour la cellule candidate et les cellules voisines de la cellule candidate ; et

l'identification (707) de la zone d'intersection calculée en tant que la zone de chevauchement de couverture de la cellule candidate avec les cellules voisines de la cellule candidate.

11. Noeud de planification de canal d'accès aléatoire selon la revendication 9, dans lequel le calcul (307) du facteur de collision d'indice de séquence racine pour la cellule candidate pour chaque indice de séquence racine dans la deuxième liste comprend :

le calcul du facteur de collision d'indice de séquence racine, Fc, pour chaque indice de séquence racine inclus dans la deuxième liste en utilisant l'équation

$$Fc = \frac{\sum_{n=1}^{x} Zone\ de\ chevauchement\ de\ couverture\ avec\ cellule\ voisine\ avec\ abs(P_{RSI}-N_n)<R_{RSI}}{Zone\ de\ couverture\ totale\ de\ cellule\ candidate}$$

12. Noeud de planification de canal d'accès aléatoire selon l'une quelconque des revendications 9 à 11, comprenant en outre :

la création (601) d'une pluralité de groupes de tous les indices de séquence racine pour toutes les cellules du réseau d'accès radio Greenfield, dans lequel chaque groupe a un numéro de groupe et inclut un sous-ensemble défini de tous les indices de séquence racine ;

la génération (603) d'un nombre de grappes de toutes les cellules du réseau d'accès radio Greenfield sur la base de métadonnées de site physique de toutes les cellules, dans lequel chaque grappe comprend un sous-ensemble de toutes les cellules définies par le décompte minimal d'indices de séquence racine dans les groupes (601) créés et où toutes les cellules d'un site du réseau d'accès radio Greenfield restent dans la même grappe ;

pour chaque grappe, la sélection (605) du numéro de groupe qui est égal à (numéro de grappe)MOD(le nombre défini de préambules de canal d'accès aléatoire pour la cellule candidate) ; et

la répétition (607), pour une cellule candidate de grappe dans chaque grappe, de l'identification, l'utilisation et l'initiation pour la cellule candidate de grappe dans chaque grappe.

13. Noeud de planification de canal d'accès aléatoire selon la revendication 9, dans lequel l'identification comprend :

pour chacune de la cellule candidate et des cellules voisines de la cellule candidate, l'obtention (1201) de mesures géolocalisées et de métadonnées de site physique à partir du réseau de communication pour la cellule candidate et les cellules voisines de la cellule candidate pour un réseau d'accès radio opérationnel ;

pour chacune de la cellule candidate et des cellules voisines de la cellule candidate, l'identification (1203) d'un polygone de couverture de la cellule candidate et des cellules voisines de la cellule candidate sur la base d'un contour des mesures géolocalisées et des métadonnées de site physique pour la cellule candidate et les cellules voisines de la cellule candidate où une force de signal est supérieure ou égale à une force de signal définie ;

le calcul (1205) d'une zone d'intersection des polygones de couverture identifiés pour la cellule candidate et les cellules voisines de la cellule candidate ; et

l'identification (1207) de la zone d'intersection calculée en tant que la zone de chevauchement de couverture de la cellule candidate avec les cellules voisines de la cellule candidate.

14. Noeud de planification de canal d'accès aléatoire selon la revendication 13, dans lequel la déduction (305) de la deuxième liste d'indices de séquence racine à partir de la première liste comprend tous les indices de séquence racine de la première liste.

15. Noeud de planification de canal d'accès aléatoire selon l'une quelconque des revendications 9 à 14, comprenant en outre :

la détermination (1601) d'un taux de réussite d'un canal d'accès aléatoire d'une cellule dans le réseau d'accès radio sur la base de mesures de performance reçues depuis la cellule ; et

la détermination (1603) si le taux de réussite du canal d'accès aléatoire de la cellule est ou non inférieur à une valeur spécifiée.

$$C_v \begin{cases} vN_{CS} & v = 0,1,...,\lfloor L_{RA}/N_{CS} \rfloor - 1, N_{CS} \neq 0 \\ 0 & N_{CS} = 0 \end{cases}$$

## Figure 1

| zeroCorrelationZoneConfig | $N_{CS}$ value for unrestricted set |
|---|---|
| 0 | 0 |
| 1 | 2 |
| 2 | 4 |
| 3 | 6 |
| 4 | 8 |
| 5 | 10 |
| 6 | 12 |
| 7 | 13 |
| 8 | 15 |
| 9 | 17 |
| 10 | 19 |
| 11 | 23 |
| 12 | 27 |
| 13 | 34 |
| 14 | 46 |
| 15 | 69 |

## Figure 2

```
        ( A )
          |
          v
```

**Identify the neighboring cells which have coverage overlap with the candidate cell** — 301

**Prepare a distinct list of Root Sequence Indexes (RSI) of all overlapping neighboring cells. Each element of this list is denoted by $N_{RSI}$ and this list is denoted by $L_{Nbr}$** — 303

**Derive a list, denoted by $L_{cand}$, of all the RSIs from the list, denoted by $L_A$, of possible RSI values where each element in the list $L_{cand}$, denoted by $P_{RSI}$, should meet following condition :**
$$abs(P_{RSI} - N_{RSI}) >= R_{RSI}$$
**where $R_{RSI}$ is the number of root sequences required to generate desired number of RACH preambles for a cell** — 305

**Calculate RSI collision factor $F_c$, of the candidate cell for each RSI in list $P_{RSI}$ and allocate the RSI with minimum collision factor to the candidate cell.** — 307

```
        ( End )
```

Figure 3

# Figure 4

RACH Planning Node
400

Network Interface
405

Processor
401

Memory
403

Figure 5

Figure 6

## Figure 7

Best coverage prediction plots for all the candidate and neighbor cells

701

Physical site meta data

703
Identify coverage polygon (s) P1 & P2 of candidate cell and neighbor cell respectively

705
Calculate the area of intersection of P1 & P2

707
Coverage overlap area of candidate and neighbor cell

Figure 8

```
rach-ConfigCommon setup :
    {
      rach-ConfigGeneric
      {
        prach-ConfigurationIndex 75,
        msg1-FDM one,
        msg1-FrequencyStart 0,
        zeroCorrelationZoneConfig 0,
        preambleReceivedTargetPower -110,
        preambleTransMax n10,
        powerRampingStep dB4,
        ra-ResponseWindow sl20
      },
      totalNumberOfRA-Preambles 8,
      ssb-perRACH-OccasionAndCB-PreamblesPerSSB one : n8,
      ra-ContentionResolutionTimer sf16,
      prach-RootSequenceIndex 1139 : 1,
      msg1-SubcarrierSpacing kHz120,
      restrictedSetConfig unrestrictedSet
    }
```

Figure 9

| $G_N$ | RSI Values | | | | | | | | | | | | | | | | | |
|---|---|---|---|---|---|---|---|---|---|---|---|---|---|---|---|---|---|---|
| 0 | 1 | 9 | 17 | 25 | 33 | 41 | 49 | 57 | 65 | 73 | 81 | 89 | 97 | 105 | 113 | 121 | 129 | 137 |
| 1 | 2 | 10 | 18 | 26 | 34 | 42 | 50 | 58 | 66 | 74 | 82 | 90 | 98 | 106 | 114 | 122 | 130 | 138 |
| 2 | 3 | 11 | 19 | 27 | 35 | 43 | 51 | 59 | 67 | 75 | 83 | 91 | 99 | 107 | 115 | 123 | 131 | 139 |
| 3 | 4 | 12 | 20 | 28 | 36 | 44 | 52 | 60 | 68 | 76 | 84 | 92 | 100 | 108 | 116 | 124 | 132 | |
| 4 | 5 | 13 | 21 | 29 | 37 | 45 | 53 | 61 | 69 | 77 | 85 | 93 | 101 | 109 | 117 | 125 | 133 | |
| 5 | 6 | 14 | 22 | 30 | 38 | 46 | 54 | 62 | 70 | 78 | 86 | 94 | 102 | 110 | 118 | 126 | 134 | |
| 6 | 7 | 15 | 23 | 31 | 39 | 47 | 55 | 63 | 71 | 79 | 87 | 95 | 103 | 111 | 119 | 127 | 135 | |
| 7 | 8 | 16 | 24 | 32 | 40 | 48 | 56 | 64 | 72 | 80 | 88 | 96 | 104 | 112 | 120 | 128 | 136 | |

Figure 10

Contour of coverage of neighborcell
where Signal Strength >= $S_{thresh}$

$S_2, R_2$

$S_1, R_1$

Overlap area with
neighbor cell

+ : Candidate cell measurement
x : Neighbor cell measurement

Contour of coverage of candidate cell
where Signal Strength >= $S_{thresh}$

Figure 11

Figure 12

```
┌─────────────────────────┐      1203
│  Geo-located measurement │  ┌──────────────────────────┐        1205                    1207
│ events for all the candidate and │ Identify coverage polygon (s) │  ┌──────────────────────┐
│       neighbor cells      │ │ P1 & P2 ,of candidate cell and │ │ Calculate the area of │ ┌──────────────────────┐
└─────────────────────────┘ │  neighbor cell respectively, │ │ intersection of P1 & P2 │ │  Coverage overlap     │
                     1201    │ defined by the contour of geo- │ └──────────────────────┘ │  area of candidate    │
┌─────────────────────────┐ │ located measurement events of │                          │  and neighbor cell    │
│                         │ │   a given cell where signal   │                          └──────────────────────┘
│  Physical site meta data │ │     strength >= S_thresh      │
│                         │ └──────────────────────────┘
└─────────────────────────┘
```

Figure 13

# Figure 14

Sequence diagram for cloud implementation

| NR Access Network | OSS 1307 | RACH Planning Node 400 |
|---|---|---|

1305

1401 — RACH performance measured and recorded as PM counters

1403 — Capture measurement events

1405 — PM Counters and events stored in OSS for each NR node

1407 — Event geo-location agent (Measurement events)

1409 — RACH Success Rate of any NR Cell < $T_{press}$ ?

1411 — No action (No)

1413 — Derive $f_{c,i}$ for the candidate cell, where i = 1,2 ..., 139 (Yes)

1415 — Select RSI with minimum $f_c$

1417 — Run command to change the RSI of the candidate cell

1419 — RSI of the NR cell changed to new RSI

30

EP 4 018 706 B1

Identify coverage overlap of candidate cell with each neighboring cell — 1501

Use identified coverage overlap area to calculate and select a RSI for the candidate cell having a minimum RSI collision factor — 1503

Initiate command to the candidate cell to set RSI for the candidate cell to the selected RSI having the minimum RSI collision factor — 1505

Figure 15

Determine success rate of RACH of cell in radio access network based on performance measurements received from cell — 1601

Determine whether success rate of RACH of cell is less than specified value — 1603

If success rate is less than specified value, identify the cell as the candidate cell — 1605

Perform the identifying, the using, and the initiating for the candidate cell — 1607

Figure 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018155885 A1

- CN 104125574 A